# EUROPÄISCHE PATENTSCHRIFT

(11) **EP 3 333 552 B1**
(45) Veröffentlichungstag und Bekanntmachung des Hinweises auf die Patenterteilung: **13.02.2019**
(21) Anmeldenummer: 16202725.4
(22) Anmeldetag: 07.12.2016
(51) Int. Cl.: G01F 1/66, G01F 15/00, B26F 1/16, G01F 15/18

(54) **ULTRASCHALL-DURCHFLUSSMESSVORRICHTUNG UND IHR HERSTELLUNGSVERFAHREN**
ULTRASOUND FLOW METER AND METHOD FOR MANUFACTURING IT
DÉBITMÈTRE À ULTRASONS ET SON PROCÉDÉ DE PRODUCTION

(43) Veröffentlichungstag der Anmeldung: 13.06.2018
(73) Patentinhaber: SICK Engineering GmbH, 01458 Ottendorf-Okrilla (DE)
(72) Erfinder: Schulz, Dr. Christian, 01069 Dresden (DE); Schneider, Jörg, 09126 Chemnitz (DE); Schmidt, Torsten, 09126 Chemnitz (DE)
(74) Vertreter: Hehl, Ulrich

(56) Entgegenhaltungen:
- EP-A1- 3 062 114
- EP-A1- 3 246 668
- EP-B1- 1 378 727
- JP-A- 2000 337 940

## Beschreibung

Die Erfindung betrifft ein Verfahren zur Herstellung einer Ultraschalldurchflussmessvorrichtung sowie eine Ultraschalldurchflussmessvorrichtung nach dem Oberbegriff von Anspruch 1 beziehungsweise 14.

Für die Bestimmung der Strömungsgeschwindigkeit oder des Durchflusses auf Ultraschallbasis sind unterschiedliche Messprinzipien bekannt. Bei einem Dopplerverfahren wird die je nach Strömungsgeschwindigkeit unterschiedliche Frequenzverschiebung eines an dem strömenden Fluid reflektierten Ultraschallsignals ausgewertet. Bei einem Differenzlaufzeitverfahren wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen.
Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ultraschallwandler gesorgt werden.

Eine verbreitete Lösung besteht darin, die Ultraschallwandler mit direktem Kontakt zum Fluid in die Leitung hineinragen zu lassen. Solche intrusiven Sonden können genaue Messungen durch Störung der Strömung erschweren. Umgekehrt sind die eintauchenden Ultraschallwandler dem Fluid und dessen Druck und Temperatur ausgesetzt und werden dadurch womöglich beschädigt oder verlieren durch Verschmutzung und Ablagerungen ihre Funktion.

Grundsätzlich sind auch Techniken bekannt, bei denen die Innenwand vollständig geschlossen bleibt. Ein Beispiel ist die sogenannte Clamp-On-Montage etwa gemäß US 4 467 659, mit der Ultraschallwandler von außen an der Leitung befestigt werden. Damit können aber nur diametrale Messpfade durch die Rohrachse realisiert werden, wodurch bei nicht axialsymmetrischen Strömungsprofilen zusätzliche Fehler erzeugt werden. Durch die massive Rohrwandstärke, die das Ultraschallsignal durchdringen muss, verringert sich außerdem der Signal-Rauschabstand, und dadurch wird das Messsystem störanfälliger.

Die JP 2000 337 940 A zeigt eine weitere Durchflussmessvorrichtung, bei der die piezoelektrischen Elemente die Leitungswand am Boden einer Bohrung in die Leitung kontaktieren. Dazu ist aber ein komplizierter mehrteiliger Aufbau erforderlich, und die Sonden können die Strömung stören. Die Probleme einer robusten Messung, einer ausreichend breiten Abstrahlung und eines einfachen Wandleraufbaus werden folglich nicht gelöst.

In der DE 102 48 542 A1 wird vorgeschlagen, den Ultraschallwandler direkt auf eine Funktionsfläche aufzubringen, die mit dem Medium in Kontakt steht. Eine Pfadausrichtung mit einer Komponente in Strömungsrichtung wird durch Anschrägen der Funktionsflächen und damit der Leitung erreicht. Eine ebene, ungestörte Rohrinnenwand ist dadurch ausgeschlossen.

Die EP 1 378 272 B1 schlägt vor, die Ultraschall erzeugenden Elemente an einer Außenseite einer Wandung anzubringen. Im Gegensatz zur Clamp-On-Technik wird dabei der Ultraschallwandler gleichsam in die Wandung integriert. In dem Bereich der Ultraschallwandler wird eine Tasche mit erheblich geringerer Wandstärke als die restliche Wandung geformt, und die verbleibende Wandstärke bildet die Membran des Ultraschallwandlers. Diese auch als Clamp-In bezeichnete Montage ist gewissermaßen eine Zwischenform der festen Montage im Innenraum der Leitung und der Clamp-On-Montage. Der Wandleraufbau ist aber relativ kompliziert und eine breite, nahezu kugelförmige Abstrahlung bei kleiner Abstrahlfläche zumindest für höhere Frequenzen nicht gesichert.

Aus der EP 3 062 114 A1 ist ein Ultraschallwandler und ein Verfahren zu dessen Herstellung bekannt. Dabei wird die Innenfläche der Membran zur Oberflächenvergrößerung strukturiert, um den anschließenden Klebeverbund mit dem Schwingkörper zu verbessern. Die Membran wird für ein Clamp-In-Verfahren im Bereich von Hohlräumen für den Ultraschallwandler in die Kanalwand einer Rohrleitung geschweißt.

Im Prinzip würde ein Ultraschalldurchflussmesser mit einer glatten Rohrinnenwand und in die Rohrwand integrierten Ultraschallwandlern die meisten der bisher geschilderten Probleme lösen. Um zugleich einen einfachen Aufbau der Ultraschallwandler und eine ausreichend große Abstrahlfläche zu erreichen, ist eine komplexe Geometrie der Taschen in der Rohrwand erforderlich, in denen die Ultraschallwander angeordnet werden.

Die nachveröffentlichte EP 3 246 668 A1 offenbart eine Messvorrichtung nach dem Clamp-In-Prinzip, in der zwischen Membran und Schwingkörper ein Koppelstück angeordnet ist, dessen Querschnitt kleiner ist als der Querschnitt des Schwingkörpers. Dabei wird aber das Fertigungsverfahren nicht beschrieben.

Es bleibt die praktische Herausforderung, eine derartige Tasche mit hoher Präzision und zugleich kostengünstig zu fertigen. Im Prinzip können filigrane Strukturen durch Mikrofräsen erzeugt werden, wobei in Abhängigkeit der zu fertigenden Strukturgrößen Mikrofräser mit einem Durchmesser kleiner ein Millimeter eingesetzt werden. Dazu sind dann aber hohe Bearbeitungszeiten erforderlich, und bei schlecht zerspanbaren Werkstoffen verschleißen zudem die Werkzeuge schnell. Andere zunächst in Frage kommende Verfahren sind Mikrofräsen in Kombination mit Mikroschweißen, Mikro-EDM (Electric Discharge Machining), Mikro-ECM (Electrochemical Machining) oder Laserablation. Diese Verfahren sind aber weder wirtschaftlich noch ausreichend präzise.

Ein weiteres an sich bekanntes Fertigungsverfahren, das aber bisher im Stand der Technik nicht mit Ultraschallmessung oder gar der Herstellung von Wandlertaschen in Verbindung gebracht wurde, ist das Profilbohren. Das ist das Bohren mit einem Profilwerkzeug zur Erzeugung von rotationssymmetrischen Innenflächen, die durch das Hauptschneidenprofil des Werkzeugs bestimmt sind. Zur Erzeugung von Profilbohrungen werden vorwiegend Werkzeuge ab einem Durchmesser von größer als 3 mm eingesetzt. Für die einfache Geometrie einer Wandlertasche wie in der EP 1 378 727 B1 wäre Profilbohren überflüssig.
Die DIN 8589 ordnet das Profilbohren den Trennverfahren in der Untergruppe Bohren/Senken/Reiben zu, die wiederum zur Gruppe Spanen mit geometrisch bestimmter Schneide gehört. Untervarianten des Profilbohrens sind:
- Profilbohren ins Volle. Bohren in den vollen Werkstoff zur Erzeugung der durch das Hauptschneidenprofil des Bohrwerkzeuges bestimmten rotationssymmetrischen, profilierten Bohrungen.
- Profilaufbohren. Aufbohren eines bereits vorhandenen oder vorgearbeiteten Loches zur Erzeugung der durch das Hauptschneidenprofil des Bohrwerkzeuges bestimmten rotationssymmetrischen Innenfläche.
- Profilsenken. Ein mit einem Profil-Senkwerkzeug durchgeführtes Bohrverfahren zur Erzeugung von durch das Hauptschneidenprofil des Bohrwerkzeuges bestimmten rotationssymmetrischen, profilierten Senkungen.
- Profilreiben. Profilaufbohren mit geringer Spanungsdicke durch ein Reibwerkzeug zur Erzeugung von maß- und formgenauen, profilierten Innenflächen mit hoher Oberflächengüte.
Vor diesem Hintergrund ist Aufgabe der Erfindung, die Anordnung von Ultraschallwandlern in einer Ultraschalldurchflussmessvorrichtung zu verbessern.
Diese Aufgabe wird durch ein Verfahren zur Herstellung einer Ultraschalldurchflussmessvorrichtung nach Anspruch 1 gelöst. Grundlage ist das einleitend erläuterte Clamp-In-Prinzip. Dazu wird in einer Leitungswand eines Leitungsabschnitts von außen mindestens eine Tasche ausgebildet. Der Leitungsabschnitt wird typischerweise als Teil einer Leitung eingesetzt, in der im Betrieb das Fluid strömt, dessen Durchfluss gemessen werden soll, so dass der Querschnitt des Leitungsabschnitts vorzugsweise dieser Leitung entspricht. In die Tasche wird ein Ultraschallwandler eingesetzt, und dessen Schwingkörper koppelt an einen Teilbereich der Leitungswand. Der Schwingkörper, beispielsweise eine Piezokeramik, nutzt also den Teilbereich als Membran.
Die Erfindung geht dann von dem Grundgedanken aus, als einen Herstellungsschritt für die Tasche einen Bohrvorgang für ein Sackloch zu nutzen. Zugleich mit der Tasche wird ein Koppelstück hergestellt, als Teil der Leitungswand, der beim Ausbilden der Tasche stehen bleibt. Das Koppelstück ist nach Einsetzen des Ultraschallwandlers zwischen Membran und Schwingkörper angeordnet und vorzugsweise dünner, in realistischer Anwendung erheblich dünner als der Schwingkörper. Der Schwingkörper sitzt also wie eine Art Stempel mit dem Koppelstück auf der Leitungswand auf, und das Koppelstück überträgt Ultraschall zwischen Membran und Schwingkörper. Das kann in beide Richtungen erfolgen, je nachdem, ob der Ultraschallwandler als Sender oder als Empfänger fungiert. Durch diesen Aufbau begrenzen die Dimensionen des Koppelstücks und nicht diejenigen des Schwingkörpers die Größe der Abstrahlfläche. Es wird dadurch gleichzeitig eine kleine Wandlerplatte oder effektive Membran und ein großer Schwingkörper ermöglicht. Die Tasche führt dazu, dass der die Membran bildende Teilbereich der Leitungswand wesentlich dünner ausgebildet ist als die übrige Leitungswand. Das Koppelstück ist in seinem Querschnitt klein sowohl gegen den Schwingkörper als auch den Boden der Tasche.

Die Erfindung hat zunächst alle Vorteile des Clamp-In, nämlich eine hohe Messgenauigkeit ähnlich einem intrusiven Verfahren, wobei aber zugleich der Innenraum für die Strömung völlig ungestört bleibt. Die Taschen für den Ultraschallwandler ist integraler Bestandteil der dünnwandigen Trägerstruktur, also der Leitungswand. Der somit in die Leitungswand integrierte Ultraschallwandler ermöglicht eine sehr breite Abstrahlcharakteristik, nicht diametrale Messpfade und die Erfassung nicht axialsymmetrischer Strömungsprofile. Dabei hat der Ultraschallwandler einen einfachen Aufbau aus wenigen Teilen und ist serienfähig und kostengünstig in kleinen Abmaßen herstellbar.

Die erfindungsgemäße Herstellung wird den hohen Anforderungen für die Herstellung komplexer leitungswandintegrierter Ultraschallwandler gerecht. Die Herstellung ermöglicht kurze Fertigungszeiten, ist kostengünstig, für Serienfertigung geeignet und sichert die Reproduzierbarkeit der Bearbeitung bei engsten Form- und Lagetoleranzen. Der Bohrvorgang gewährleistet die zentrische Anordnung der zum Bohrungseintritt gerichteten erhabenen Geometrie, d.h. des Koppelstücks. Dabei sind Taschen mit komplexer Geometrie und Beschaffenheit mit hoher Genauigkeit unter Einhaltung der noch zulässigen Abweichungen bei kleinen Abmessungen herstellbar. Die Tasche kann folglich hinsichtlich der Geometrie, insbesondere der Koppelstücklänge und Koppelstückbreite beziehungsweise des Koppelstückdurchmessers auch mit unsymmetrischen Aspektverhältnissen, der Restwandstärke der Membran und der allgemeinen Taschengeometrie, beispielsweise sphärisch einfach oder doppelt gekrümmt, aber auch der Beschaffenheit, insbesondere Ebenheit oder Rauheit, noch allgemeiner Struktur auf der Koppelstück- und Taschenbodenoberfläche, alle erforderlichen Eigenschaften für eine gute Schallerzeugung und einen guten Schallnachweis erfüllen. Außerdem ist eine gute Montierbarkeit und Ankopplung der Schwingkörpers auf dem Koppelstück zur Übertragung der Formänderung und damit des Ultraschalls gewährleistet.

Der Bohrvorgang weist vorzugsweise Profilbohren auf. Das Fertigungsverfahren Profilbohren wird dabei mit einem besonderen Profilbohrwerkzeug eingesetzt. Das Hauptschneidenprofil für die grobe Tasche wird um weitere und abgewandelte Schneiden ergänzt, um die genaue Geometrie und das Koppelstück herzustellen.
Vorzugsweise wird ein Profilbohrwerkzeug verwendet, das eine innenliegende Nebenschneide aufweist, mit dem seitliche Flächen des Koppelstücks hergestellt werden. Das ist eine mögliche Modifikation eines herkömmlichen Profilbohrwerkzeugs, mit dem ein Teil des Koppelstücks in seiner Geometrie festgelegt und mit hoher Qualität hergestellt wird.
Vorzugsweise wird ein Profilbohrwerkzeug verwendet, das eine innenliegende Querschneide aufweist, mit der die Höhe und Kontaktfläche des Koppelstücks hergestellt wird. Mit dieser Modifikation eines herkömmlichen Profilbohrwerkzeugs lässt sich die Höhe und die Beschaffenheit der oberen Kontaktfläche des Koppelstücks für den Schwingkörper festlegen.

Der Bohrvorgang weist vorzugsweise ein Vorbohren auf. Vorbohren bedeutet im Gegensatz zu Profilbohren, dass nur ein Sackloch für die Tasche hergestellt wird. Eine besondere Geometrie am Boden der Tasche oder gar das Koppelstück entsteht so noch nicht. Diese Geometrie entsteht anschließend beispielsweise durch Profilbohren. Der Vorteil ist, dass die komplexeren Werkzeuge, insbesondere ein Profilbohrwerkzeug, nach dem Vorbohren weniger abgenutzt werden und tatsächlich nur noch für die konkrete komplexere Geometrie erstellt werden müssen. Die anschließende Endfertigung der Tasche ist also durch das Vorbohren erheblich vereinfacht.
Nach dem Bohrvorgang erfolgt bevorzugt ein Fließpressvorgang, um eine Endform der Geometrie der Tasche herzustellen. Damit werden Fertigungsschritte kombiniert. Der vorangehende Bohrvorgang kann ein Profilbohren sein. Dann dient das Fließpressen beziehungsweise Rückwärtsfließpressen dazu, die schon vorhandene Tasche mit zumindest Vorstrukturen des Koppelstücks mittels Profilstempel in die Endform zu pressen. Geht lediglich ein Vorbohren voraus, so erzeugt der Profilstempel in dem Fließpressvorgang die besondere Geometrie der Tasche und das Koppelstück. Auch die Kombination von drei Fertigungsschritten, Vorbohren, Profilbohren und Fließpressen, ist denkbar.

Das Koppelstück ist einstückig mit der Leitungswand ausgebildet. Der Boden der Tasche bildet vorzugsweise die Membran, und auf dem Boden ist das Koppelstück angeordnet. Das Koppelstück ist also integraler Teil der Leitungswand, ebenso die Membran als Boden der Tasche. Es gibt keine Zwischenschichten, Klebe- oder sonstige Kontaktstellen, damit keine Probleme mit mechanischer Stabilität der Verbindung und optimale Schallübertragung.

Das Koppelstück weist bevorzugt einen Durchmesser und/oder eine Höhe von wenigen Millimetern, insbesondere höchstens 2 mm auf. Die Leitungswand weist im Bereich der Membran, also am Boden der Tasche, vorzugsweise eine Restwandstärke von höchstens 1 mm oder sogar höchstens 0,8 mm oder noch weniger auf. Die erfindungsgemäß herzustellende Tasche weist folglich Mikrodimensionen auf. Das wird funktionell gebraucht, damit der Schwingkörper geeignet ankoppeln kann beziehungsweise die Membran die gewünschte akustische Kopplung zu dem Fluid leistet. Gerade kleine Abmessungen bei dennoch sehr präziser Geometrie sind ein Grund, warum die Herstellung der Tasche so anspruchsvoll ist. Profilbohren dient im Stand der Technik typischerweise der Herstellung größerer Strukturen von 3 mm und mehr. Deshalb wird erfindungsgemäß vorzugsweise ein besonders angepasstes Profilbohrwerkzeug mit innenliegenden Neben- und Querschneiden wie oben beschrieben eingesetzt.

Das Koppelstück weist bevorzugt eine zylindrische, kegelförmige oder gestufte Geometrie auf. Das Koppelstück kann insgesamt die Form eines Zylinders oder Kegelstumpfes, aber auch eine Mischung aus beidem aufweisen. Die Grundfläche ist üblicherweise rotationssymmetrisch, also ein Kreis. Eine asymmetrische Grundfläche wie bei einer Ellipse oder sogar eine Grundfläche mit Ecken sind nicht völlig ausgeschlossen, aber akustisch wie fertigungstechnisch in der Regel weniger geeignet. Außerdem sind Stufen denkbar, also eine sprungartige Änderung des Durchmessers in einer oder mehreren Höhenlagen der Tasche. Auch eine kontinuierliche Änderung des Durchmessers, die anders als bei einem Kegel nichtlinear ist, wäre möglich. Die Geometrien werden vorzugsweise durch ein speziell angepasstes Profilbohrwerkzeug oder einen Pressstempel hergestellt. Abweichungen von der Rotationssymmetrie können beispielsweise als abschließender Schritt durch Fließpressen erreicht werden.

Die das Koppelstück umgebende Leitungswand ist vorzugsweise eben oder strukturiert ausgebildet ist. Dieser Bereich ist der Boden der Tasche um das Koppelstück herum, der die Membran bildet. Je nach akustischen Anforderungen kann dieser Bereich glatt sein oder eine gewünschte Struktur aufweisen. Jedenfalls ist dies vorzugsweise genau durch die Herstellung der Tasche vorgegeben.

Die Tasche insgesamt weist bevorzugt eine zylindrische, kegelförmige, elliptische oder gestufte Geometrie auf. Damit ist die Form der Tasche abgesehen von dem Koppelstück gemeint. Die geometrischen Ausgestaltungen sowie die Möglichkeiten, diese zu erreichen, entsprechen denjenigen des Koppelstücks. Zudem ist hier eine elliptische Geometrie als Beispiel einer kontinuierlichen Änderung des Durchmessers der Querschnittsfläche genannt, die im Übrigen aber auch für das Koppelstück möglich wäre. Für die Herstellung der Geometrie der Tasche sind andere Bereiche der Werkzeuge betroffen als für diejenige des Koppelstücks, etwa außen- statt innenliegender Schneiden eines Profilbohrwerkzeugs.

Die Tasche ist bevorzugt nach außen hin durch einen Wandlerhalter geschlossen. Der Wandhalter ist folglich eine Art Deckel des Ultraschallwandlerbereichs. Ein Zugang durch diesen Deckel beispielsweise für Anschluss- oder Datenleitungen bleibt aber möglich. Der Schwingkörper ist vorzugsweise elastisch mit dem Wandlerhalter verbunden. So wird der Schwingkörper stabil gehaltert, ohne die Schwingbewegung einzuschränken. Dazu kann beispielsweise eine Elastomerschicht dienen.

Der Schwingkörper ist vorzugsweise in longitudinaler und transversaler Richtung schwingfähig. Der Schwingkörper nutzt also zusätzliche Freiheitsgrade, die ihm durch die Anordnung auf dem dünnen Koppelstück geboten werden. Weil die Schwingbewegung an das Ausschütteln eines Kissens erinnert, wird der Schwingkörper auch als Kissenschwinger bezeichnet. Eine vergleichbare Schwingung ist bei herkömmlicher Anordnung mit vollflächiger Verbindung der Unterseite des Schwingkörpers mit der Leitung gar nicht möglich.

Der Schwingkörper ist vorzugsweise quader- oder zylinderförmig ausgebildet. Wie schon erläutert, sind wegen der Ankopplung über das Koppelstück die Dimensionen des Schwingkörpers nicht durch die Abstrahlfläche bestimmt. Der Schwingkörper ist vorzugsweise nicht nur eine dünne Keramik, sondern weist in Höhenrichtung eine Ausdehnung in ähnlicher Größenordnung auf wie seine Querschnittsfläche. Der Schwingkörper kann auch aus mehreren Einzelschichten aufgebaut sein.

Der Schwingkörper ist vorzugsweise zumindest teilweise in der Tasche angeordnet. Noch bevorzugter ist der Schwingkörper vollständig innerhalb der Tasche untergebracht. Dadurch kann das Koppelstück auch vergleichsweise kurz bleiben, und die Elemente des Ultraschallwandlers sind in die Leitungswand integriert.

Das Fluid ist vorzugsweise eine Flüssigkeit, wobei ein Gas auch möglich ist. Mit einem Clamp-In-Durchflussmesser werden sogar üblicherweise Strömungsgeschwindigkeiten von Gasen gemessen. Bei Gasen werden Ultraschallfrequenzen eingesetzt, die auch im herkömmlichen Aufbau eine realistische fertigungstechnische Umsetzung von Schwingkörper und als Membran fungierendem Teilbereich der Leitungswand erlauben. Die Anforderungen an den Aufbau rühren daher, dass eine breite Abstrahlcharakteristik nur mit Abstrahlflächen kleiner als die Wellenlänge möglich ist. Für Flüssigkeiten werden aber höhere Frequenzen benötigt. Dann müsste eine Abstrahlfläche von weniger als 4 mm bei einer Restwanddicke und Spalte unterhalb 500 µm erreicht werden. Erfindungsgemäß wird dieses Problem durch das Koppelstück und die damit erreichte Auflösung der Abhängigkeit der Dimensionierungen von Schwingkörper und Abstrahlfläche beziehungsweise die besondere Schwingung auf dem Koppelstück gelöst.

Die Aufgabe wird außerdem durch eine Ultraschallmessvorrichtung gemäß Anspruch 14 gelöst. Diese Ultraschallmessvorrichtung kann insbesondere mit einer Ausführungsform des erfindungsgemäßen Herstellungsverfahrens hergestellt sein und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Vorzugsweise weist die Ultraschalldurchflussmessvorrichtung mindestens zwei Taschen mit jeweils einem Ultraschallwandler auf, die einander mit der Strömung dazwischen und einem Versatz in Strömungsrichtung gegenüberliegen, und die eine Auswertungseinheit aufweist, die dafür ausgebildet ist, Ultraschallsignale zwischen den Ultraschallwandlern auszutauschen und die Strömungsgeschwindigkeit auf einem Laufzeitunterschied von mit und gegen die Strömung ausgesandtem und wieder empfangenem Ultraschall zu bestimmen. Die Ultraschalldurchflussmessvorrichtung arbeitet folglich nach dem Differenzlaufzeitverfahren. Mit zwei Taschen und zwei Ultraschallwandlern wird zunächst nur ein Ultraschallpfad aufgespannt. Weitere Ultraschallpfade durch zusätzliche Ultraschallwandler sind aber denkbar, um eine inhomogene oder gestörte Strömung genauer zu erfassen. Auch die weiteren Ultraschallpfade sind vorzugsweise durch Ultraschallwandler in Taschen mit Koppelstück wie beschrieben realisiert. Ein Beispiel für ein alternatives Messprinzip ist das Dopplerverfahren.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Längsschnittansicht einer Messvorrichtung zur Bestimmung der Strömungsgeschwindigkeit mit Ultraschallwandlern;
- Fig. 2: eine Detailansicht eines Ultraschallwandlerbereichs in Figur 1;
- Fig. 3: eine schematische dreidimensionale Darstellung der Schwingung eines Schwingkörpers eines Ultraschallwandlers;
- Fig. 4: eine dreidimensionale Innenansicht einer Tasche in der Rohrwand für einen Ultraschallwandler;
- Fig. 5: eine Detailansicht eines Ultraschallwandlers ähnlich Fig. 2 für eine Geometrievariante einer Tasche;
- Fig. 6: ein Überblick über mögliche geometrische Ausgestaltungen von Taschen mit Koppelstück für einen Ultraschallwandler;
- Fig. 7: eine Darstellung eines Bohrwerkzeugs zur Einführung von Begrifflichkeiten zu dessen Beschreibung;
- Fig. 8: ein Schaubild für Fertigungsvarianten zur Herstellung einer Tasche mit Koppelstück;
- Fig. 9: eine Illustration der Herstellung einer Tasche durch eine Prozesskette Vorbohren - Profilbohren - Fließpressen;
- Fig. 10: eine Illustration der Herstellung einer Tasche durch eine Prozesskette Vorbohren - Fließpressen;
- Fig. 11: eine Illustration der Herstellung einer Tasche durch eine Prozesskette Profilbohren - Fließpressen;
- Fig. 12: eine Illustration der Herstellung einer Tasche durch eine Prozesskette Vorbohren - Profilbohren; und
- Fig. 13: eine Illustration der Herstellung einer Tasche durch Profilbohren allein.

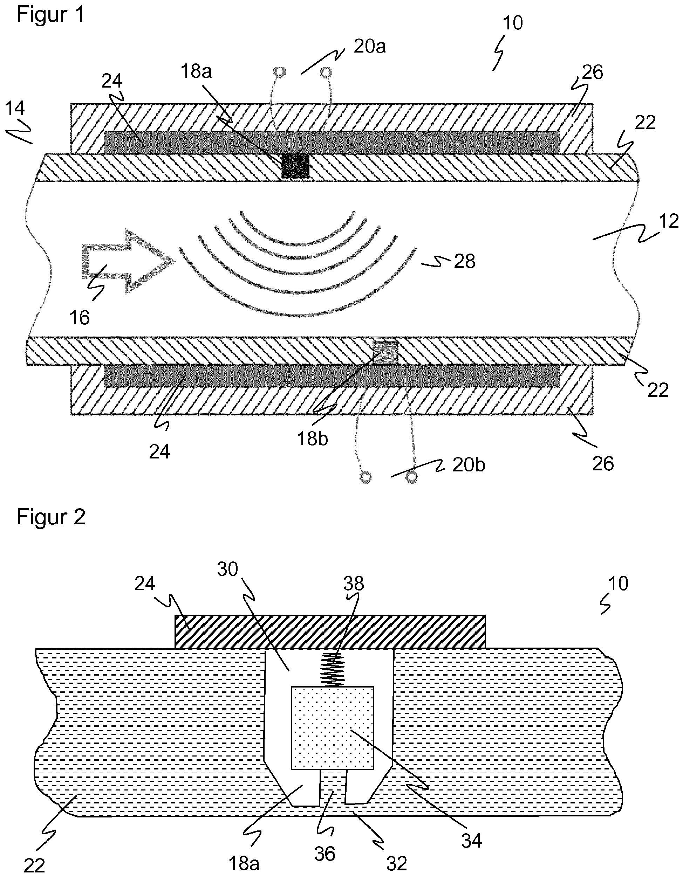

Figur 1 zeigt eine vereinfachte Längsschnittansicht einer Messvorrichtung 10 zur Bestimmung der Strömungsgeschwindigkeit beziehungsweise des daraus berechneten Durchflusses eines Fluids 12 in einer rohrförmigen Leitung 14, das in einer durch einen Pfeil 16 bezeichneten Richtung strömt. Die Bestimmung der Strömungsgeschwindigkeit erfolgt beispielsweise mit dem einleitend beschriebenen Differenzlaufzeitverfahren durch Auswertung der Laufzeiten bei Aussenden und Erfassen von Ultraschallsignalen zwischen einem Paar Ultraschallwandler 18a-b mit und gegen die Strömung in einer Steuer- und Auswertungseinheit. In Figur 1 ist die Steuer- und Auswertungseinheit nicht selbst dargestellt, sondern durch nur deren Anschlüsse 20a-b an die Ultraschallwandler 18a-b angedeutet. In anderen Ausführungsformen kann die Anzahl der Ultraschallwandler 18a-b variieren.

Die Leitung 14 im Bereich der Ultraschallmessung bildet einen Messkörper der Messvorrichtung 10. Die Darstellung ist so gewählt, als sei dieser Messkörper ein integraler Bestandteil der vorhandenen Leitung 14. Das ist prinzipiell möglich, in der Praxis wird aber die Messvorrichtung 10 mit einem eigenen Messkörper hergestellt, der nach der Montage einen entsprechenden Abschnitt einer vorhandenen Leitung ersetzt und dazu beispielsweise an beiden Seiten mit Flanschverbindungen eingefügt wird.

Die Ultraschallwandler 18a-b sind in eine Leitungswand 22 der Leitung 14 integriert. Das entspricht zunächst der einleitend erläuterten Clamp-In-Montage wie etwa in dem einleitend genannten Patent EP 1 378 727 B1, jedoch mit einem verbesserten Wandlerkonzept, das unten näher erläutert wird. Die Ultraschallwandler 18a-b werden von außen durch einen Wandlerhalter 24 gestützt. Ganz außen ist in dieser beispielhaften Ausführungsform die Leitung 14 beziehungsweise der Wandlerhalter 24 im Bereich des Messkörpers von einem Gehäuse oder einem Verkleidungsrohr 26 umgeben.

Wie durch Schallausbreitungslinien 28 angedeutet, ist die Abstrahl- beziehungsweise Einstrahlrichtung der Ultraschallwandler 18a-b senkrecht zu einer Mittenachse der Leitung 14. Um dennoch einen axialen Versatz der beiden Ultraschallwandler 18a-b und damit einen Messeffekt bei einem Laufzeitdifferenzverfahren zu erzielen, ist eine breite Abstrahlcharakteristik von beispielsweise mehr als 20° erforderlich. Bei einer höheren Ultraschallfrequenz insbesondere im hohen kHz- oder sogar MHz-Bereich bedeutet dies eine Abstrahlfläche, deren Durchmesser nur noch in der Größenordnung eines Millimeters liegt.

Anstelle von zwei Ultraschallwandlern 18a-b können auch für eine Messvorrichtung 10 mit Mehrpfadauslegung mehrere Paare von Ultraschallwandlern vorgesehen sein, die zwischen einander eine Vielzahl von Messpfaden aufspannen. Mit einem solchen Mehrpfadzähler, der mehrere gegeneinander und gegen die Rohrachse versetzte Messpfade aufweist, ist bei ungleichmäßiger Strömung oder Vorstörungen eine genauere Messung möglich. Ein Einpfadzähler setzt implizit eine homogene Strömung voraus, die durch den einzigen Pfad erfassbar ist, beziehungsweise misst dadurch nur eine erste Näherung einer komplizierteren Strömung.

Figur 2 zeigt den Bereich eines Ultraschallwandlers 18a in der Leitungswand 22 in einer vergrößerten Darstellung, um die Verbesserung und Vereinfachung durch das erfindungsgemäße Wandlerprinzip genauer zu illustrieren. In der Leitungswand 22 ist ein Hohlraum oder eine Tasche 30 ausgebildet, die nach außen hin durch den Wandlerhalter 24 geschlossen wird. Nach innen hin verbleibt im Bereich der Tasche 30 von der Leitungswand 22 ein dünnwandiger Teilbereich 32, der zugleich als Membran des Ultraschallwandlers 18a dient und von dessen Schwingkörper 34, beispielsweise einer Piezokeramik, zum Schwingen angeregt wird, um ein Ultraschallsignal auszusenden, beziehungsweise es wird umgekehrt bei Auftreffen eines Ultraschallsignals aus dem Inneren der Leitung 14 auf den Teilbereich 32 der Schwingkörper 34 zum Schwingen angeregt. Der dünnwandige Teilbereich 32 bleibt stabil genug, um einem zu erwartenden Leitungsinnendruck standzuhalten. Die Leitungswand 22 bildet eine in sich geschlossene Innenfläche ohne Vertiefungen oder Vorsprünge, welche die Strömung stören oder an welchen sich Ablagerungen absetzen könnten.

Der Schwingkörper 34 ist nun nicht direkt auf den als Membran wirkenden Teilbereich 32 aufgesetzt. Vielmehr ist dazwischen ein Koppelelement oder Koppelstück 36 vorgesehen, dessen Querschnittsfläche deutlich kleiner ist als diejenige von Teilbereich 32 und Schwingkörper 34. Der Schwingkörper 34 kann als piezoelektrischer Block ausgebildet sein, der direkt auf das Koppelstück 36 aufgesetzt wird. Es ist sowohl eine unmittelbare Verbindung zwischen Schwingkörper 34 und Koppelstück 36 als auch ein zusätzliches Koppelmaterial denkbar. Außerdem kann die Verbindung lediglich durch eine kraftschlüssige Ankopplung, etwa durch eine Klemmkraft von oben, aber auch durch Verkleben oder Verlöten hergestellt sein.

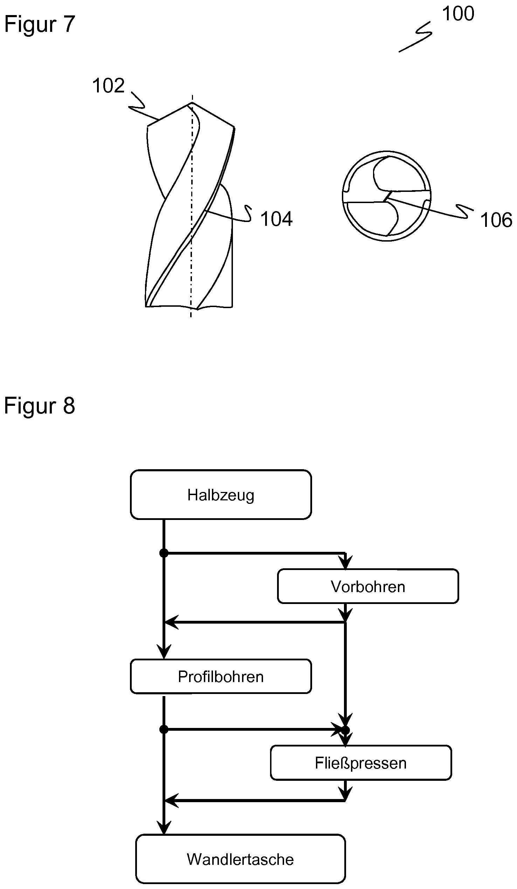

Das Koppelstück 36 wiederum ist vorzugsweise integraler Bestandteil der Leitungswand 22, so dass zusätzliche Kontaktstellen entfallen. Dazu werden Tasche 30 und Koppelstück 36 in einem effizienten Fertigungsverfahren gemeinsam ausgebildet, und dabei wird das Koppelstück 36 sozusagen stehen gelassen. Die erfindungsgemäße Fertigung wird später unter Bezugnahme auf die Figuren 7 bis 13 genauer erläutert. Es soll trotz der absehbaren Nachteile bei Schallübertragung und mechanischer Robustheit nicht ausgeschlossen sein, das Koppelstück 36 als eigenes Element am Boden der Tasche 30 an dem Teilbereich 32 zu befestigen. Nach außen hin ist der Schwingkörper nachgiebig am Wandlerhalter 24 gehalten, was durch eine Feder 38 dargestellt ist. Eine beispielhafte praktische Umsetzung der Feder 38 ist eine Elastomerschicht. Die Kraft der Feder 38 kann auch die Verbindung zwischen Schwingkörper 34 und Koppelstück 36 herstellen oder stabilisieren.

Das Koppelstück 36 ermöglicht eine Wandlerplatte oder Abstrahlfläche mit kleinem Durchmesser bei gleichzeitiger Nutzung eines größeren Schwingkörpers 34. Die mögliche Dimensionierung von Schwingkörper 34 und Abstrahlfläche wird durch das Koppelstück 36 unabhängig voneinander. Ein größerer Schwingkörper 34 ist funktional sowohl für die Frequenzauslegung als auch zum Erreichen der nötigen Empfindlichkeit vorteilhaft. Wie schon mehrfach angesprochen, ist für eine breite Abstrahlcharakteristik gerade bei höheren Frequenzen eine kleine Abstrahlfläche erforderlich. Durch das Koppelstück 36 können diese anfangs widersprüchlichen Anforderungen zugleich erfüllt werden.

Das Koppelstück 34 ermöglicht eine breite Abstrahlcharakteristik bei senkrechter Ausrichtung der Ultraschallwandler 18a-b. Prinzipiell ist auch denkbar, die Ultraschallwandler 18a-b schräg aufeinander auszurichten. Dazu ist dann der Teilbereich 32 entsprechend angeschrägt. Dementsprechend ist die Fertigung aufwändiger, weil diese Kontur des Strömungskanals geschaffen werden muss, und der Vorteil eines gänzlich glatten Strömungskanals, der sich im Bereich der Ultraschallmessung gar nicht von der übrigen Leitung unterscheidet, geht zumindest partiell verloren.

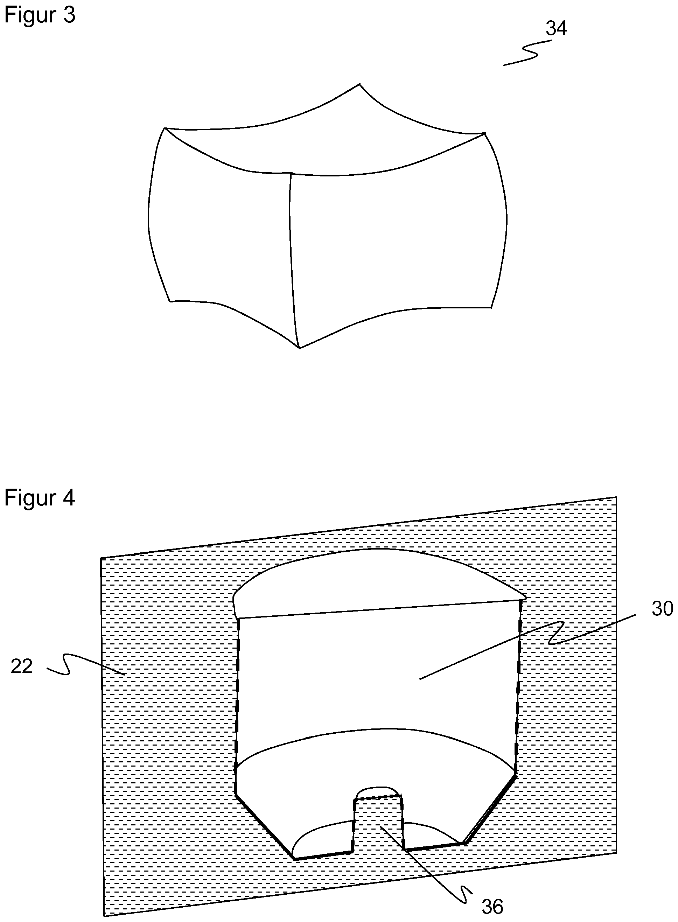

Figur 3 zeigt noch einmal gesondert eine schematische dreidimensionale Darstellung des Schwingkörpers 34 zur Erläuterung von dessen Schwingverhalten. Die konkrete quader- oder würfelförmige Geometrie des Schwingkörpers 34 ebenso wie die konkrete Verformung durch die Schwingung sind beispielhaft zu verstehen. Der Schwingkörper 34 führt durch die nur kleinflächige Festlegung am Koppelstück 36 und seine geometrische Ausdehnung in Höhen- und Seitenrichtung im Betrieb eine besondere Schwingung aus, die anschaulich als Kissenschwingung bezeichnet wird, weil sie an ein kräftig ausgeschütteltes Kopfkissen erinnert. Man kann dies als Volumenresonanz auffassen. Während der Schwingkörper 34 in der longitudinalen Arbeitsrichtung kürzer wird, also in Figur 3 in Höhenrichtung, verdickt er sich transversal zu allen Seiten. Aufgrund der Blockgeometrie ist dies an den seitlichen Kanten besonders ausgeprägt. Die Verkürzung in longitudinaler Richtung ist auch nicht gleichmäßig, sondern in der Mitte sehr stark ausgeprägt, während sich die Ecken weniger bewegen. Diese Schwingung wird durch das Koppelstück 36 auf die Membran beziehungsweise den Teilbereich 32 übertragen, oder umgekehrt versetzt die Membran bei auftreffendem Ultraschall über das Koppelstück 36 den Schwingkörper 34 in Schwingung.

Der Schwingkörper 34 arbeitet vorzugsweise in einem Frequenzbereich von einigen hundert KHz bis hin zu einigen MHz, wobei aber das Prinzip auch von wenigen kHz bis zumindest zehn MHz funktioniert. Die konkreten Nutzfrequenzen werden von der Geometrie und dem Material festgelegt, so dass dies bei der Auslegung des Schwingkörpers 34 berücksichtigt wird. Der Schwingkörper 34 wird vorzugsweise in einer seiner Resonanzen betrieben, das Koppelstück 36 in seiner Resonanz oder unterhalb seiner Resonanz. Auch die Resonanz des Teilbereichs 32 kann wahlweise genutzt werden.

Figur 4 zeigt noch einmal die Tasche 30 mit dem Koppelstück 36 in einer dreidimensionalen Schnittansicht. Die Tasche 30 ist in diesem Beispiel im oberen Bereich zylinderförmig und verjüngt sich nach innen hin durch eine Kegelstumpfform. Dadurch reduziert sich die Innenkontur in Richtung des Teilbereichs 32, der somit eine kleinere Fläche aufweist als der Querschnitt im oberen Bereich der Tasche 30, die insbesondere aufgrund des Koppelstücks 36 auch kleiner sein kann als der Schwingkörper 34. Das Koppelstück 36 ist in dieser Ausführungsform zylindrisch geformt.

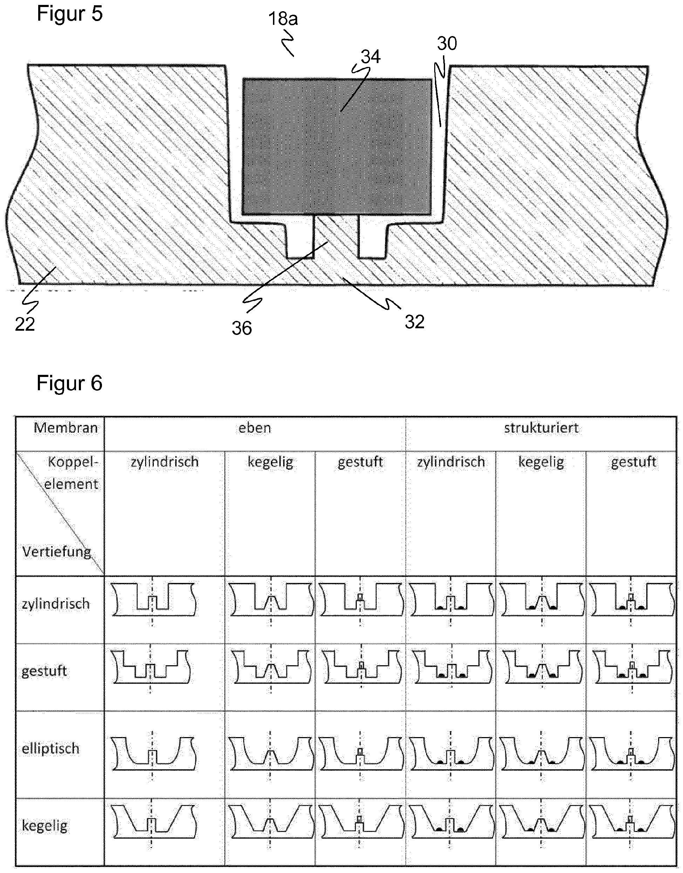

Figur 5 zeigt noch einmal einen Längsschnitt der Messvorrichtung 10 im Bereich eines Ultraschallwandlers 18a ähnlich der Figur 2, jedoch mit einer anderen Geometrie der Tasche 30. Während sich bisher die Tasche 30 zum Teilbereich 32 hin kegelförmig verjüngt, ist in Figur 5 eine gestufte Ausführung der Tasche mit einem größeren Zylinderdurchmesser im Bereich des Schwingkörpers 34 und einem kleinen Zylinderdurchmesser im Bereich des Koppelstücks 36 dargestellt.

Figur 6 zeigt einen Überblick über mögliche geometrische Ausgestaltungen der Tasche 30 und des Koppelstücks 36. Allgemein zeigt eine geeignete Geometrie der Tasche 30 eine einfache oder doppelt gekrümmte Vertiefung, das Koppelstück 36 mit unterschiedlichen möglichen Durchmessern und Höhen sowie eine geeignet gestaltete und dimensionierte Membran. Wie vertikal dargestellt, kann dabei die Tasche 30 zylindrisch, gestuft, elliptisch oder kegelig ausgebildet sein. Das bezieht sich auf die Kontur in einem vertikalen Schnitt durch die Tasche 30 wie gezeigt. In einem Querschnitt ist die Tasche 30 vorzugsweise kreisförmig. Abweichungen sind aber auch hier denkbar. Die entsprechenden Geometrievarianten stehen auch wie horizontal dargestellt für das Koppelstück 36 zur Verfügung. Dabei ist die Übersicht in horizontaler Richtung zusätzlich in zwei Gruppen unterteilt, die sich durch die Beschaffenheit der Oberfläche des Bodens der Tasche 30, also des als Membran fungierenden Teilbereichs 32 unterscheiden. Die Membran kann glatt sein wie im linken Teil der Figur 6 oder strukturiert wie im rechten Teil der Figur 6, wobei die skizzierte Struktur nur ein stellvertretendes Beispiel ist.

Die Aufstellung der Figur 6 ist nicht abschließend. Beispielsweise können mehr als zwei Stufen vorgesehen sein, von Stufe zu Stufe die Form gewechselt werden, so wie auch in Figur 5 von Zylinder auf Kegel, oder andere kontinuierliche, nichtlineare Formen gewählt werden als eine elliptische Kontur. Allerdings bleibt vorzugsweise für das Koppelstück 36 die Bedingung einer gegenüber dem Schwingkörper 34 merklich kleineren Querschnittsfläche bestehen. Für den in Figur 6 nicht gezeigten Schwingkörper 34 kommt beispielsweise die Form eines Würfels, eines Quaders oder eines Zylinders in Betracht.

Die Herstellung der Tasche 30 mit dem Koppelstück 36 weist erfindungsgemäß einen Bohrvorgang auf. Diese Herstellung wird nun anhand verschiedener Ausführungsbeispielen erläutert. Dazu zeigt Figur 7 zunächst einleitend im linken Teil eine Seitenansicht und im rechten Teil eine Draufsicht eines Bohrwerkzeugs 100. An der Spitze befinden sich die Hauptschneiden 102, die den stirnseitigen Spanhub in Vorschubrichtung sicherstellen. Die seitlichen Nebenschneiden 104 sind dem Werkstück zugewandt und bestimmen den Durchmesser des Bohrlochs. Die Querschneide 106 verbindet die beiden Hauptschneiden 102 im Bereich des Bohrerkerns. Sie erschwert den Spanungsvorgang, da sie den Werkstoff nur quetscht und nicht schneidet.

In dieser Form ist ein Bohrwerkzeug 100 nicht für die Herstellung der Tasche 30 samt Koppelstück 36 geeignet. Die mit einem herkömmlichen Werkzeug erzeugten Strukturen sind zu groß, übliche Strukturgrößen beim Profilbohren sind 3 mm. Außerdem fehlt es dem Bohrwerkzeug 100 an einer Auslegung, die für die Herstellung des zentralen Koppelstücks 36 geeignet wäre.

Denn die Anforderungen an eine Fertigungstechnologie zur Herstellung der Geometrie der Tasche 30 sind in Bezug auf die Präzision, die Bearbeitungsdauer und die Verfahrenseffizienz sehr hoch. Zum einen liegen die Dimensionen im Bereich der Mikrobearbeitung, bei der derartige Geometrienstrukturen vorrangig über das Fertigungsverfahren Mikrofräsen hergestellt werden. Zum anderen bestehen die möglichen Geometrien, über die Figur 6 einen Überblick gibt, aus mehreren Funktionselementen, deren Funktionalität stark abhängig von den erreichbaren Maß-, Form- und Lageabweichungen des Fertigungsverfahrens ist.

Wegen der Komplexität der Geometrie kann nur ein Teil davon über das Hauptschneidenprofil des Profilbohrers entsprechend den Hauptschneiden 102 erzeugt werden. Zur Erzeugung der vollständigen Geometrie sind weitere Schneidelemente am Werkzeug erforderlich, die herkömmlich nicht vorgesehen sind.

Diese Modifikationen können in einem Rückblick auf die beispielhafte Geometrie nach Figur 4 erläutert werden. Über das Hauptschneidenprofil können die Elemente der Vertiefung und des anschließenden Konus und ein Teil des Bodens der Tasche 30 abgebildet werden. Diese Bereiche sind durch eine fette Linie hervorgehoben. Alle weiteren Elemente müssen durch weitere und abgewandelte Schneiden realisiert werden.

Dabei hat die über das Hauptschneidenprofil hergestellte Vertiefung der Tasche 30 selbst sowie die Konusform nur sekundäre Bedeutung für die Funktionalität. Für die Funktionalität relevant sind eher Membran beziehungsweise Teilbereich 32 und Koppelstück 36. Die Membran wird auch über das Hauptschneidenprofil hergestellt, und zwar über den Teil, der im Winkel von 90° zur Bohrerachse radial verläuft. Die Funktionalität der Membran des Taschenbodens ist abhängig von der durch das Werkzeug realisierten Ebenheit oder einer gezielt angebrachten Strukturierung. Die Dicke der Membran wird technologisch durch die Bohrtiefe bestimmt. Bei sehr geringer Membrandicke kann ein Gegenhalter, welcher an der Innenwand des Rohres positioniert ist, sinnvoll sein.

Die Nebenschneiden des Bohrwerkzeugs sind für die Seitenwände der Tasche 30 und des Koppelstücks 36 verantwortlich, wie in Figur 4 durch eine fette gestrichelte Linie gezeigt. Die äußeren Nebenschneiden entsprechen noch dem herkömmlichen Werkzeugdesign. Sie korrespondieren mit den Seitenwänden der Tasche 30 und sind für die Funktion der Tasche 30 beziehungsweise der Messvorrichtung 10 weniger relevant. Dagegen sind innenliegende Nebenschneiden für die Seiten des am Boden in dem Teilbereich 30 angeschlossenen Koppelstücks 36 herkömmlich nicht vorgesehen. Dabei können geringe Durchmesserabweichungen und eine hohe Reproduzierbarkeit erreicht werden. Die Länge des Koppelstücks 36 wird durch eine zusätzliche innen liegende Querschneide realisiert, welche auch die Ebenheit auf der Anschlussfläche des Koppelstücks 36 definiert. Die Auswirkung dieser besonderen Querschneide ist in Figur 4 durch eine fette gepunktete Linie angedeutet. Somit ist die Geometrie des Koppelstücks 36, das zu einer wesentlichen Verbesserung der Messvorrichtung 10 beiträgt, durch Modifikationen des Bohrwerkzeugs erreicht. Durch eine Erweiterung der Technologie im Vergleich zum bekannten Profilbohren können Taschen mit Geometrien im Größenbereich unterhalb von 3 mm prozesssicher hergestellt werden. Als Zahlenbeispiel für die herzustellenden Strukturgrößen beträgt der Durchmesser des Koppelstücks 36 sowie dessen Höhe höchstens 2 mm und die Dicke der Membran höchstens 0,8 mm.

Profilbohren insbesondere mit einem modifizierten Bohrwerkzeug wie soeben beschrieben ist eine mögliche Ausführungsform der Herstellung der Tasche 30. Für eine Herstellung oder Verfeinerung der Geometrie kommt außer (Sackloch)profilbohren auch noch (Rückwärts)fließpressen in Frage, wobei letzterem dann vorzugsweise ein Bohren vorausgeht. Die Geometrie der Tasche 30 entsteht folglich erfindungsgemäß durch einen ein- oder mehrstufigen Fertigungsprozess, der Vorbohren, Profilbohren und/oder Fließpressen aufweist.

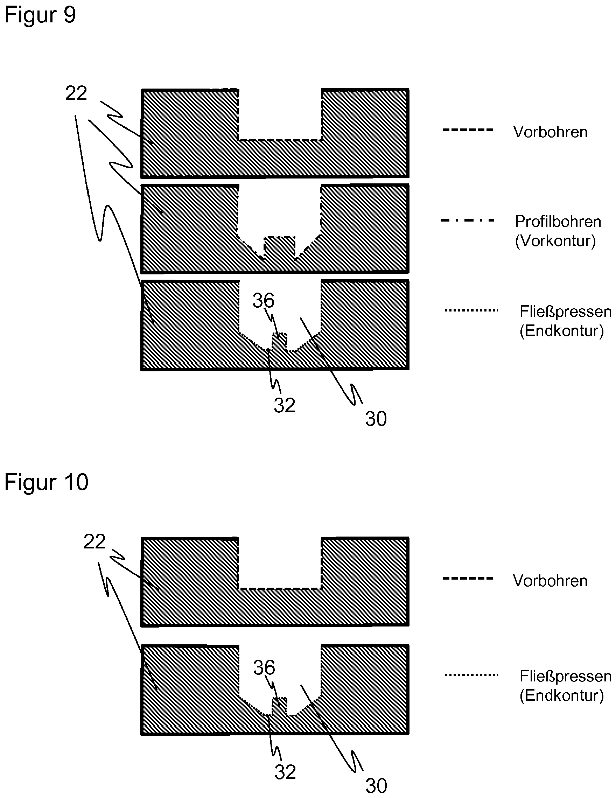

Figur 8 zeigt konkrete vorteilhafte Prozessketten. Die fünf aus Figur 8 ableitbaren Prozessketten werden nun anhand der Figuren 9 bis 13 näher erläutert.

Figur 9 zeigt den Ablauf für die Prozesskette Vorbohren - Profilbohren - Fließpressen. In dieser Ausführungsform wird zunächst durch einen Vorbohrprozessschritt die Wandstärke im Bereich der Tasche 30 reduziert. Anschließend wird eine Vorprofilform durch Profilbohren mit Aufmaß erzeugt. Die Endformgebung erfolgt im letzten Schritt durch einen Fließpressprozess, bei dem das Profilaufmaß der Tasche 30 durch einen Profilstempel in die entsprechende Endform umgeformt wird.

Figur 10 zeigt den Ablauf für die Prozesskette Vorbohren - Fließpressen. In dieser Ausführungsform wird erneut durch Vorbohrprozessschritt die Wandstärke im Bereich der Tasche 30 definiert reduziert. Für den anschließenden Fließpressprozess steht genügend Material zur Verfügung, um die Geometrieelemente der Tasche 30 auszuformen. Das Profilbohren entfällt hierbei.

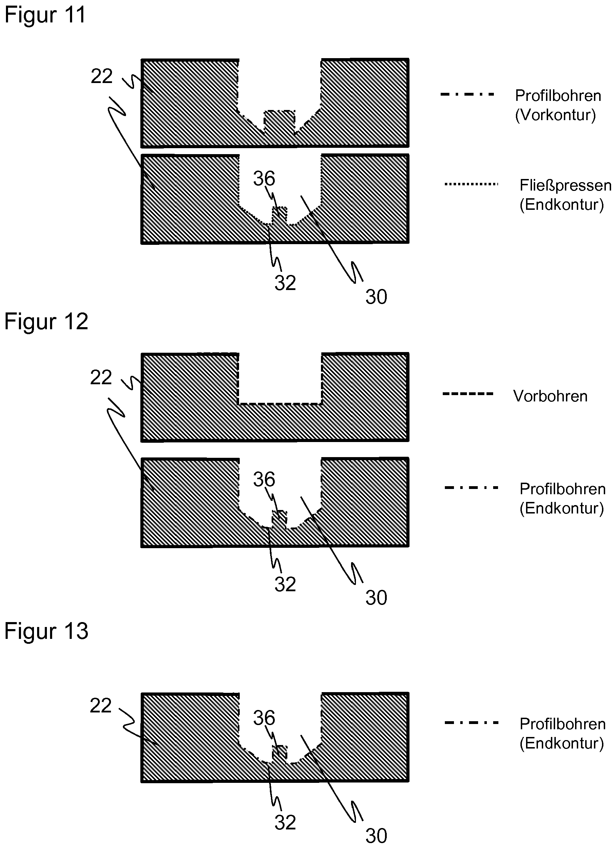

Figur 11 zeigt den Ablauf für die Prozesskette Profilbohren - Fließpressen. In dieser Ausführungsform wird mittels Profilbohren eine Vorform der Tasche 30 bis zu einer definierten Wandstärke über das profilierte Bohrwerkzeug erzeugt. Die Endformgebung erfolgt dann im zweiten und letzten Schritt durch einen Fließpressprozess, bei dem das Taschenaufmaßprofil durch einen Profilstempel in die entsprechende Endform gepresst wird. Hierbei entfällt das Vorbohren.

Figur 12 zeigt den Ablauf für die Prozesskette Vorbohren - Profilbohren. Die Prozesskette dieser Ausführungsform sieht vor, dass durch einen Vorbohrprozessschritt die Wandstärke im Bereich der Taschengeometrie reduziert wird. Anschließend wird die Taschenendform über ein profiliertes Bohrwerkzeug erzeugt. Ein abschließendes Fließpressen entfällt, das Profilbohren erzeugt direkt die Endkontur.

Figur 13 zeigt den Ablauf für einen einschrittigen Fertigungsprozess, bei dem die Endform der Tasche 30 direkt über die komplette Wandstärke über das profilierte Bohrwerkzeug erzeugt. Dabei entfällt sowohl das Vorbohren als auch das Fließpressen.

Wie aus den Ausführungsbeispielen folgt, ist zur Erzeugung der Geometrie der Tasche 30 ein Vorbohrprozess nicht zwingend notwendig, kann aber unter anderem eine Verringerung des Werkzeugverschleißes erreichen. Ebenso kann man über das Profilbohren zur Endform gelangen oder dies über ein Fließpressen erreichen. Die Vorteile beider Verfahren können kombiniert werden, was zu einer besonders präzisen, aber auch etwas aufwändigeren Fertigung führt.

Die konkrete Wahl der Prozesskette wird unter anderem durch die gewünschte Geometrie der Tasche 30, den bearbeitenden Werkstoff sowie die herzustellenden Losgrößen beeinflusst. Je nach Ausführungsform werden ein speziell für die Geometrie der Tasche 30 ausgelegter Formbohrer und/oder Fließpressstempel benötigt. Übrigens zeigt sich auch im fertigen Produkt das Herstellungsverfahren durch verfahrenscharakteristische Bearbeitungsspuren.

## Patentansprüche

1. Verfahren zur Herstellung einer Ultraschalldurchflussmessvorrichtung (10),
wobei in eine Leitungswand (22) eines Leitungsabschnitts (14), in dem im Betrieb ein Fluid (12) strömt, von außen mindestens eine Tasche (30) für einen UItraschallwandler (18a-b) hergestellt und ein Ultraschallwandler (18a-b) in der Tasche (30) angeordnet wird, wobei der Ultraschallwandler (18a-b) einen Schwingkörper (34) aufweist, der an einen Teilbereich (32) der Leitungswand (22) ankoppelt, der als schwingungsfähige Membran des Ultraschallwandlers (18a-b) wirkt, **dadurch gekennzeichnet, dass** gemeinsam mit der Tasche (30) ein Koppelstück (36) als Teil der Leitungswand (22) hergestellt wird, das nach Einsetzen des Ultraschallwandlers (18a-b) zwischen Membran und Schwingkörper (34) angeordnet ist und dessen Querschnitt kleiner ist als der Querschnitt des Schwingkörpers (34), und wobei ein Herstellungsschritt der Tasche (30) einen Bohrvorgang aufweist.

2. Verfahren nach Anspruch 1,
wobei der Bohrvorgang Profilbohren aufweist.

3. Verfahren nach Anspruch 2,
wobei ein Profilbohrwerkzeug verwendet wird, das eine innenliegende Nebenschneide aufweist, mit dem seitliche Flächen des Koppelstücks (36) hergestellt werden.

4. Verfahren nach Anspruch 2 oder 3,
wobei ein Profilbohrwerkzeug verwendet wird, das eine innenliegende Querschneide aufweist, mit dem die Höhe und Kontaktfläche des Koppelstücks (36) hergestellt wird.

5. Verfahren nach einem der vorhergehenden Ansprüche,
wobei der Bohrvorgang Vorbohren aufweist.

6. Verfahren nach einem der vorhergehenden Ansprüche,
wobei nach dem Bohrvorgang ein Fließpressvorgang erfolgt, um eine Endform der Geometrie der Tasche (30) herzustellen.

7. Verfahren nach einem der vorhergehenden Ansprüche,
wobei das Koppelstück (36) einstückig mit der Leitungswand (22) ausgebildet ist und/oder wobei der Boden der Tasche (30) die Membran bildet und auf dem Boden das Koppelstück (36) angeordnet ist.

8. Verfahren nach einem der vorhergehenden Ansprüche,
wobei das Koppelstück (36) einen Durchmesser und/oder eine Höhe von wenigen Millimetern, insbesondere höchstens 2 mm aufweist, und/oder wobei die Leitungswand (22) im Bereich der Membran eine Restwandstärke von höchstens einem 1 mm aufweist.

9. Verfahren nach einem der vorhergehenden Ansprüche,
wobei das Koppelstück (36) eine zylindrische, kegelförmige oder gestufte Geometrie aufweist.

10. Verfahren nach einem der vorhergehenden Ansprüche,
wobei die das Koppelstück (36) umgebende Leitungswand (22, 32) eben oder strukturiert ausgebildet ist.

11. Verfahren nach einem der vorhergehenden Ansprüche,
wobei die Tasche (30) insgesamt eine zylindrische, kegelförmige, elliptische oder gestufte Geometrie aufweist.

12. Verfahren nach einem der vorhergehenden Ansprüche,
wobei die Tasche (30) nach außen hin durch einen Wandlerhalter (24) geschlossen ist und insbesondere der Schwingkörper (34) elastisch mit dem Wandlerhalter (24) verbunden ist.

13. Verfahren nach einem der vorhergehenden Ansprüche,
wobei der Schwingkörper (34) in longitudinaler und transversaler Richtung schwingfähig ist.

14. Ultraschalldurchflussmessvorrichtung (10), insbesondere hergestellt nach einem der vorhergehenden Ansprüche, zum Bestimmen der Strömungsgeschwindigkeit eines in einer Leitung (14) strömenden Fluids (12) mit mindestens einem Ultraschallwandler (18a-b), der von außen in einer Tasche (30) einer Leitungswand (22) der Leitung (14) angebracht ist und einen Schwingkörper (34) aufweist, der an einen Teilbereich (32) der Leitungswand (22) ankoppelt, der als schwingungsfähige Membran des Ultraschallwandlers (18a-b) wirkt,
**dadurch gekennzeichnet, dass** zwischen Membran und Schwingkörper (34) ein Koppelstück (36) angeordnet ist, dessen Querschnitt kleiner ist als der Querschnitt des Schwingkörpers (34) und das Koppelstück (36) gemeinsam mit der Tasche (30) als Teil der Leitungswand (22) hergestellt ist, und wobei die Tasche (30) mit einem Herstellungsschritt hergestellt ist, der einen Bohrvorgang aufweist.

15. Ultraschallmessvorrichtung (10) nach Anspruch 14,
die mindestens zwei Taschen (30) mit jeweils einem Ultraschallwandler (18a-b) aufweist, die einander mit der Strömung dazwischen und einem Versatz in Strömungsrichtung gegenüberliegen, und die eine Auswertungseinheit aufweist, die dafür ausgebildet ist, Ultraschallsignale zwischen den Ultraschallwandlern (18a-b) auszutauschen und die Strömungsgeschwindigkeit auf einem Laufzeitunterschied von mit und gegen die Strömung ausgesandtem und wieder empfangenem Ultraschall zu bestimmen.

## Claims

1. A method of manufacturing an ultrasound flow rate measurement apparatus (10), wherein at least one pocket (30) for an ultrasonic transducer (18a-b) is made from the outside in a line wall (22) of a line section (14) in which a fluid (12) flows in operation, and an ultrasonic transducer (18a-b) is arranged in the pocket (30), wherein the ultrasonic transducer (18a-b) comprises an oscillating body (34) that couples to a part region (32) of the line wall (22) and that acts as a membrane of the ultrasonic transducer (18a-b) capable of vibration,
**characterized in that** a coupling piece (36) is manufactured together with the pocket (30) as a part of the line wall (22) which is arranged between the membrane and the oscillating body (34) after the insertion of the ultrasonic transducer (18a-b) and whose cross-section is smaller than a cross-section of the oscillating body (34), and wherein a manufacturing step of the pocket (30) comprises a drilling procedure.

2. The method in accordance with claim 1,
wherein the drilling procedure comprises profile drilling.

3. The method in accordance with claim 2,
wherein a profile drilling tool is used that has an inwardly disposed secondary cutting edge with which lateral surfaces of the coupling piece (36) are manufactured.

4. The method in accordance with claim 2 or 3,
wherein a profile drilling tool is used that has an inwardly disposed transverse cutting edge with which the height and contact surface of the coupling piece (36) is manufactured.

5. The method in accordance with any of the preceding claims,
wherein the drilling procedure comprises pre-drilling.

6. The method in accordance with any of the preceding claims,
wherein an extrusion procedure takes place after the drilling procedure to manufacture an end shape of the geometry of the pocket (30).

7. The method in accordance with any of the preceding claims,
wherein the coupling piece (36) is made in one piece with the line wall (22) and/or wherein a base of the pocket (30) forms the membrane and the coupling piece (36) is arranged on the base.

8. The method in accordance with any of the preceding claims,
wherein the coupling piece (36) has a diameter and/or a height of a few millimeters, in particular at most 2 mm, and/or wherein the line wall (22) has a residual wall thickness of at most one 1 mm in the region of the membrane.

9. The method in accordance with any of the preceding claims,
wherein the coupling piece (36) has a cylindrical, conical or stepped geometry.

10. The method in accordance with any of the preceding claims,
wherein the line wall (22) surrounding the coupling piece (36) is planar or structured.

11. The method in accordance with any of the preceding claims,
wherein the pocket (30) has a cylindrical, conical, elliptical or stepped geometry overall.

12. The method in accordance with any of the preceding claims,
wherein the pocket (30) is closed toward the outside by a transducer holder (24) and in particular the oscillating body (34) is elastically connected to the transducer holder (24).

13. The method in accordance with any of the preceding claims,
wherein the oscillating body (34) can vibrate in the longitudinal and transverse directions.

14. An ultrasound flow rate measurement apparatus (10), in particular manufactured in accordance with any of the preceding claims, for determining the flow speed of a fluid (12) flowing in a line (14) using at least one ultrasonic transducer (18a-b) that is attached from the outside in a pocket (30) of a line wall (22) of the line (14) and that has an oscillating body (34) that couples to a part region (32) of the line wall (22) and that acts as a membrane of the ultrasonic transducer (18a-b) capable of vibration,
**characterized in that** a coupling piece (36) is arranged between the membrane and the oscillating body (34) whose cross-section is smaller than the cross-section of the oscillating body (34) and which is manufactured together with the pocket (30) as a part of the line wall (22) and wherein the pocket (30) is manufactured by a manufacturing step that comprises a drilling procedure.

15. The ultrasound measurement apparatus (10) in accordance with claim 14, that has at least two pockets (30) each having an ultrasonic transducer (18a-b) that are disposed opposite one another with the flow therebetween and with an offset in the direction of flow and that has an evaluation unit that is configured to exchange ultrasound signals between the ultrasonic transducers (18a-b) and to determine the flow speed with respect to a time of flight difference of ultrasound transmitted and received again with and against the flow.

## Revendications

1. Procédé de réalisation d'un dispositif formant débitmètre à ultrasons (10), dans lequel au moins une poche (30) destinée à un transducteur ultrasonore (18a - b) est réalisée depuis l'extérieur dans une paroi de conduit (22) d'un tronçon de conduit (14) dans lequel circule un fluide (12) pendant le fonctionnement, et un transducteur ultrasonore (18a - b) est agencé dans la poche (30), le transducteur ultrasonore (18a - b) comprenant un corps oscillant (34) qui est couplé à une zone partielle (32) de la paroi de conduit (22) qui fait office de membrane apte à osciller du transducteur ultrasonore (18a-b),
**caractérisé en ce que** conjointement avec la poche (30), un élément de couplage (36) est réalisé de manière à faire partie de la paroi de conduit (22), qui, après insertion du transducteur ultrasonore (18a - b), est agencé entre la membrane et le corps oscillant (34) et dont la section transversale est inférieure à la section transversale du corps oscillant (34), et
une étape de réalisation de la poche (30) comprend une opération de perçage.

2. Procédé selon la revendication 1,
dans lequel l'opération de perçage comprend un perçage de profil.

3. Procédé selon la revendication 2,
dans lequel un outil de perçage de profil est utilisé, qui comprend un tranchant secondaire intérieur permettant de réaliser des surfaces latérales de l'élément de couplage (36).

4. Procédé selon la revendication 2 ou 3,
dans lequel un outil de perçage de profil est utilisé, qui comprend un tranchant transversal intérieur permettant de réaliser la hauteur et la surface de contact de l'élément de couplage (36).

5. Procédé selon l'une des revendications précédentes,
dans lequel l'opération de perçage comprend un perçage préalable.

6. Procédé selon l'une des revendications précédentes,
dans lequel une opération d'extrusion s'effectue après l'opération de perçage, afin de réaliser une forme finale de la géométrie de la poche (30).

7. Procédé selon l'une des revendications précédentes,
dans lequel l'élément de couplage (36) est réalisé d'un seul tenant avec la paroi de conduit (22), et/ou le fond de la poche (30) constitue la membrane et l'élément de couplage (36) est agencé sur le fond.

8. Procédé selon l'une des revendications précédentes,
dans lequel l'élément de couplage (36) présente un diamètre et/ou une hauteur de quelques millimètres, en particulier au plus de 2 mm, et/ou au niveau de la membrane, la paroi de conduit (22) présente une épaisseur de paroi résiduelle au plus de 1 mm.

9. Procédé selon l'une des revendications précédentes,
dans lequel l'élément de couplage (36) présente une géométrie cylindrique, conique ou étagée.

10. Procédé selon l'une des revendications précédentes,
dans lequel la paroi de conduit (22, 32) entourant l'élément de couplage (36) est réalisée plane ou structurée.

11. Procédé selon l'une des revendications précédentes,
dans lequel la poche (30) présente globalement une géométrie cylindrique, conique, elliptique ou étagée.

12. Procédé selon l'une des revendications précédentes,
dans lequel la poche (30) est refermée vers l'extérieur par un support de transducteur (24), et en particulier le corps oscillant (34) est relié élastiquement au support de transducteur (24).

13. Procédé selon l'une des revendications précédentes,
dans lequel le corps oscillant (34) est capable d'osciller en direction longitudinale et transversale.

14. Dispositif formant débitmètre à ultrasons (10), en particulier réalisé selon l'une des revendications précédentes, destiné à déterminer la vitesse d'écoulement d'un fluide (12) circulant dans un conduit (14), comportant au moins un transducteur ultrasonore (18a - b) qui est monté depuis l'extérieur dans une poche (30) d'une paroi (22) du conduit (14) et qui comprend un corps oscillant (34) qui est couplé à une zone partielle (32) de la paroi de conduit (22) qui fait office de membrane apte à osciller du transducteur ultrasonore (18a - b),
**caractérisé en ce que** un élément de couplage (36) est agencé entre la membrane et le corps oscillant (34), dont la section transversale est inférieure à la section transversale du corps oscillant (34), et l'élément de couplage (36) est réalisé conjointement avec la poche (30) de manière à faire partie de la paroi de conduit (22), et
la poche (30) est réalisée par une étape de réalisation qui comprend une opération de perçage.

15. Dispositif formant débitmètre à ultrasons (10) selon la revendication 14, qui comprend au moins deux poches (30) pourvues chacune d'un transducteur ultrasonore (18a - b), qui sont opposées l'une à l'autre en ayant l'écoulement entre elles et en présentant un décalage en direction d'écoulement, et qui comprend une unité d'évaluation qui est réalisée pour échanger des signaux ultrasonores entre les transducteurs ultrasonores (18a - b) et pour déterminer la vitesse d'écoulement en se basant sur une différence de temps de parcours d'ultrasons émis et reçus avec et à l'encontre de l'écoulement.
